# EUROPEAN PATENT SPECIFICATION

(11) **EP 2 568 139 B1**
(45) Date of publication and mention of the grant of the patent: **13.07.2016**
(21) Application number: 12184093.8
(22) Date of filing: 12.09.2012
(51) Int. Cl.: F01N 13/00, F01N 3/10, F01N 13/18, B01D 53/94

(54) **Integrated connection device for connecting several sensors**
Anschlussmodul für mehrere Sensoren
Module de connexion pour connecter plusieurs capteurs

(30) Priority: 12.09.2011 US 201161533642 P; 12.09.2011 US 201161533643 P; 12.09.2011 US 201161533645 P
(43) Date of publication of application: 13.03.2013
(73) Proprietor: Cummins Emission Solutions, Inc., Columbus, IN 47202 (US); McKeeth, Dave, Arcadia, WI 54612 (US); VerDuin, Pete J., Berrien, MI 49103 (US)
(72) Inventor: Nowicki Robert, Stoughton, WI 53589 (US); Drost Jason, Edgerton, WI 53534 (US); Klein Pat, Madison, WI 53718 (US); Woods Daniel, Rewey, WI 53580 (US); Welp Mike, Oregon, WI 53575 (US); Khisty Snehal, Madison, WI 53717 (US); McKeeth Dave, Arcadia, WI 54612 (US); Verduin Pete J., Berrien Springs, MI 49103 (US)
(74) Representative: Roberts, Peter David

(56) References cited:
- EP-A1- 1 717 423
- WO-A2-2007/050384
- US-A1- 2007 144 146

## Description

### BACKGROUND

The technical field generally relates to internal combustion engine aftertreatment systems, and more particularly but not exclusively relates to integrating aftertreatment devices into a vehicle. Modern systems that include internal combustion engines often include an aftertreatment system to reduce emissions. Aftertreatment systems often include multiple components, including particulate filters, oxidation catalysts, NOx adsorbers, NOx reduction catalysts, three-way catalysts, four-way catalysts, and can further include multiple components of the same type at various locations along the aftertreatment system flowpath. The inclusion of an aftertreatment system introduces various system integration complications. The aftertreatment system occupies space that must be accounted for in the system design (e.g., in the engine compartment of a vehicle), and where multiple aftertreatment components are included there are multiple points of integration. The points of integration include sensor connections, flow point connections, injector connections, and any other operational interaction between parts of the aftertreatment system and the external system in which the aftertreatment system is installed.

Multiple points of integration introduce further complications, including tracking specifications for each integration point, the stackup of multiple tolerance values creating greater variance in installation parameters such as total exhaust pipe length, and increased possibility of installing a component in the incorrect place (e.g. swapping two components or connectors) or in the incorrect position (e.g installing a component backwards). Therefore, further improvements in this area of technology are desirable,

EP1717423 relates to a sensor control device according to the abstract of which the sensor control device is connected with a plurality of exhaust sensors including an NOx sensor to be disposed around a catalyst, and is constructed such that a plurality of drive control circuits to be connected in a one-to-one relationship with the individual gas sensors are disposed in one casing. The sensor control device is provided with a communication output section that outputs signals through a digital communication line so that the signal transmissions/receptions with an ECU may be executed through the digital communication line. This digital communication line is physically a one-system cable but can transmit and receive signals of a plurality of kinds with predetermined communication protocols.

US2007/144146 relates to an exhaust gas purification device of an internal combustion engine, according to the abstract of which an ECU performs exhaust temperature control based on output values of multiple exhaust temperature sensors provided upstream and downstream of a particulate filter provided in an exhaust passage of an engine. The ECU calculates a change speed deviation value by subtracting change speed of outlet side exhaust temperature, which is sensed by one of the exhaust temperature sensors, from change speed of inlet side exhaust temperature, which is sensed by the other one of the exhaust temperature sensors, in an operation state in which temperature of exhaust gas flowing through the particulate filter changes rapidly. The ECU determines that the exhaust temperature sensors are mounted erroneously if the change speed deviation value deviates from a predetermined normal range.

WO2007/050384 relates to a system for particulate matter sensor signal processing according to the abstract of which there is provided a system having a particulate matter sensor in an exhaust stream of an engine upstream from a particulate filter and another such sensor downstream from the filter. There may also be an exhaust gas recirculation (EGR) control on the engine. The amount of particulate matter in or loading of the filter may be determine by the upstream filter. The working condition of the filter may be determined by the downstream sensor. The filter may have a heater and control for providing operational and particulate matter burn-off temperatures to the filter. A processor may be connected to the sensors, the EGR control and the filter heater control.

### SUMMARY

One embodiment is a unique apparatus for communicating multiple aftertreatment sensors through a single output port. Further embodiments, forms, objects, features, advantages, aspects, and benefits shall become apparent from the following description and drawings.

According to a first embodiment of the present invention there is provided an apparatus including a housing having a first input port, a second input port, a third input port, and an output port, an electronic sensor suitable to be operationally coupled to an exhaust flowpath, an electrical conduit structured to electrically couple the electronic sensor to the first input port, a first fluid conduit fluidly open to the second input port at a first end and fluidly open to the exhaust flowpath at a position upstream of a particulate filter at a second end, a second fluid conduit fluidly open to the third input port at a first end and fluidly open to the exhaust flowpath at a position downstream of the particulate filter at a second end, a differential pressure sensor structured to determine a differential pressure in response to a first pressure at the second input port and a second pressure at the third input port wherein the differential pressure sensor is located in the housing, and a communication means for providing electronic information representative of the differential pressure and output from the electronic sensor at the output port, wherein the communication means is disposed in the housing.

The electronic sensor may be a thermistor, an oxygen sensor, a NOₓ sensor, a mass airflow sensor, or a pressure sensor.

The housing may be suitable to be mounted on an aftertreatment component.

The aftertreatment component may include an oxidation catalyst, the particulate filter, a NOx adsorber, a three-way catalyst, a four-way catalyst, a selective reduction catalyst, and/or a lean NOx reduction catalyst.

The housing may be suitable to be mounted on a metal plate interposed between the housing and the aftertreatment component.

The housing may be further suitable to be mounted on a support interposed between the housing and the aftertreatment component, where the support provides a gap between the housing and the aftertreatment component.

The gap may include a gap of at least 30 millimeters and/or a gap such that, when the aftertreatment component is at a rated temperature, a temperature of the housing does not exceed 125° C.

The electronic information representative of the differential pressure and output from the electronic sensor may include a modulated electric parameter, a datalink signal, and/or a network signal.

The housing may include only one output port.

According to a second embodiment of the present invention there is provided a method including mounting a housing on an aftertreatment component, operationally coupling an electronic sensor to an exhaust flowpath, and electrically coupling a first input port of the housing to the electronic sensor. The method further includes fluidly coupling a second input port of the housing to the exhaust flowpath at a position upstream of a particulate filter, fluidly coupling a third input port of the housing to the exhaust flowpath at a position downstream of the particulate filter, and providing a differential pressure sensor that determines a differential pressure in response to a first pressure at the second input port and a second pressure at the third input port, wherein the differential pressure sensor is located in the housing. The method further includes providing a communication means for providing electronic information representative of the differential pressure and the output from the electronic sensor at the output port, wherein the communication means is disposed in the housing. The housing includes a plurality of input ports and an output port. The aftertreatment component is disposed in the exhaust flowpath.

The aftertreatment component may include a NOx reduction catalyst and/or an oxidation catalyst.

The particulate filter may be disposed in a second aftertreatment component.

The method may further include electronically coupling an external controller to the output port, where the electronically coupling may include connecting the output port to an original equipment manufacturer wiring harness.

The electronic information representative of the differential pressure and the output from the electronic sensor may include a modulated electric parameter, a datalink signal, and/or a network signal.

According to a third embodiment of the present invention there is provided a system including an exhaust flowpath fluidly coupled to an internal combustion engine, a first aftertreatment component disposed in the exhaust flowpath, the first aftertreatment component including a first oxidation catalyst upstream of a particulate filter, a second aftertreatment component disposed in the exhaust flowpath, the second aftertreatment component including a NOx reduction catalyst upstream of a second oxidation catalyst, and a housing mounted on one of the first aftertreatment component and the second aftertreatment component, the housing having an output port and a plurality of input ports. The system further includes a first temperature sensor operationally coupled to the exhaust flowpath at a position upstream of the first oxidation catalyst, and a first electrical conduit that electrically couples the first temperature sensor to a first input port of the housing. The system further includes a first fluid conduit fluidly open to a second input port of the housing at a first end and fluidly open to the exhaust flowpath at a position upstream of the particulate filter at a second end. The system further includes a second fluid conduit fluidly open to a third input port of the housing at a first end and fluidly open to the exhaust flowpath at a position downstream of the particulate filter at a second end, and a differential pressure sensor that determines a differential pressure in response to a first pressure at the second input port and a second pressure at the third input port, wherein the differential pressure sensor is located in the housing.

The system further includes a second temperature sensor operationally coupled to the exhaust flowpath at a position downstream of the first oxidation catalyst and upstream of the particulate filter, and a second electrical conduit that electrically couples the second temperature sensor to a fourth input port of the housing. The system further includes a third temperature sensor operationally coupled to the exhaust flowpath at a position downstream of the particulate filter, and a third electrical conduit that electrically couples the third temperature sensor to a fifth input port of the housing. The system further includes a fourth temperature sensor operationally coupled to the exhaust flowpath at a position upstream of the NOx reduction catalyst, and a fourth electrical conduit that electrically couples the fourth temperature sensor to a sixth input port of the housing. The system further includes a fifth temperature sensor operationally coupled to the exhaust flowpath at a position downstream of the second oxidation catalyst, and a fifth electrical conduit that electrically couples the fifth temperature sensor to a seventh input port of the housing. The system further includes communication means for providing electronic information representative of the differential pressure and output from each of the temperature sensors at the output port of the housing, wherein the communication means is disposed in the housing.

The electronic information representative of the differential pressure and output from the electronic sensor may include a modulated electric parameter, a datalink signal, and/or a network signal

The housing may be mounted on one of: a metal plate interposed between the housing and the one of the first aftertreatment component and the second aftertreatment component, and a support interposed between the housing and the one of the first aftertreatment component and the second aftertreatment component.

The support may be structured to provide a gap between the housing and the aftertreatment component, where the gap is a gap such that, when the first aftertreatment component or the second aftertreatment component is at a rated temperature, a temperature of the housing does not exceed 125° C.

### BRIEF DESCRIPTION OF THE DRAWINGS

Fig. 1 is a schematic diagram of an internal combustion engine and an aftertreatment system with an integrated sensor connection device.
Fig. 2 is a schematic diagram of an integrated sensor connection device.
Fig. 3 is a schematic diagram of an integrated sensor connection device mounted on an aftertreatment system.
Fig. 4 is a schematic diagram of an alternate embodiment of an integrated sensor connection device mounted on an aftertreatment system.
Fig. 5 is a schematic block diagram of an apparatus for providing electronic information representative of aftertreatment sensor inputs.
Fig. 6 is a schematic flow diagram of a technique for providing an integrated sensor connection device.
Fig. 7 is a schematic flow diagram of a technique for providing electronic information from multiple aftertreatment sensors to an output port.

### DETAILED DESCRIPTION OF THE DRAWINGS

For the purposes of promoting an understanding of the principles of the invention, reference will now be made to the embodiments illustrated in the drawings and specific language will be used to describe the same. It will nevertheless be understood that no limitation of the scope of the invention is thereby intended, any alterations and further modifications in the illustrated embodiments, and any further applications of the principles of the invention as illustrated therein as would normally occur to one skilled in the art to which the invention relates are contemplated herein.

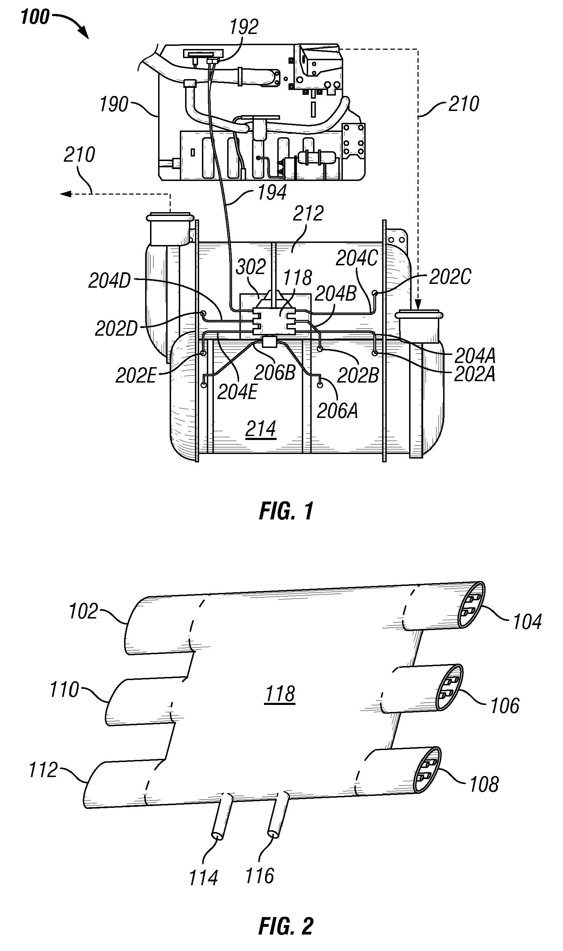

Fig. 1 is a schematic diagram of a system 100 including an internal combustion engine 190 and an aftertreatment system with an integrated sensor connection device. The system 100 includes an article of manufacture including a housing 118 having number of input ports and an output port. The input ports are connected to a number of sensors 202A, 202B, 202C, 202D, 202E via a number of electrical conduits 204A, 204B, 204C, 204D, 204E. The sensors 202A, 202B, 202C, 202D, 202E include thermistors, oxygen sensors, NOₓ sensors, mass airflow sensors, and/or pressure sensors. An exhaust flow 210 passes from the engine 190 through the aftertreatment components 212, 214 for treatment and then exits the system 100.

In the illustration of Fig. 1, sensor 202A is a temperature sensor upstream of a diesel oxidation catalyst, sensor 202B is a temperature sensor downstream of the diesel oxidation catalyst and upstream of a particulate filter, and sensor 202E is a temperature sensor downstream of the diesel oxidation catalyst. Further in the illustration of Fig. 1, the exhaust flow 210 passes through a decomposition tube (obscured) behind the aftertreatment component 214 and then into the aftertreatment component 212 on the right side. The sensor 202C is a temperature sensor upstream of a NOx reducing catalyst, and the sensor 202D is a temperature sensor downstream of the NOx reducing catalyst. The arrangement and selection of sensors 202A, 202B, 202C, 202D, 202E may be any arrangement and sensors utilized in relation to aftertreatment components 212, 214. The sensors 202A, 202B, 202C, 202D, 202E are operationally coupled to the exhaust flowpath, where the operational coupling is dependent upon the type of sensor and installation requirements to ensure the given sensor is measuring the exhaust flow for the sensed parameter.

In certain embodiments, the system 100 includes a first fluid conduit 206A fluidly open to the second input port 116 (refer to Fig. 2) at a first end and fluidly open to the exhaust flowpath at a position upstream of the particulate filter at a second end. The system 100 further includes a second fluid conduit 206B fluidly open to the third input port 114 at a first end and fluidly open to the exhaust flowpath at a position downstream of the particulate filter at a second end. The housing 118 further includes a first input port 110, a fourth input port 112, a fifth input port 108, a sixth input port 106, and a seventh input port 104. The number, placement, and sensor connections for the input ports 104, 106, 108, 110, 112 are dependent upon the sensors 202A, 202B, 202C, 202D, 202E and aftertreatment components 212, 214 present in given embodiments of the system 100. The input ports 104, 106, 108, 110, 112 are illustrated as 4-pin inputs, but may be any inputs known in the art for connection to the sensors 202A, 202B, 202C, 202D, 202E.

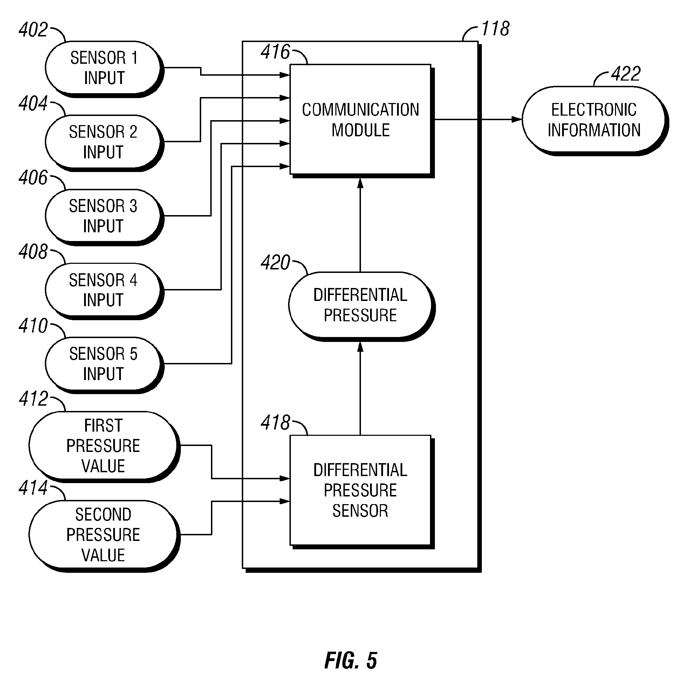

The system 100 includes a differential pressure sensor (refer to Fig. 5) that determines a differential pressure in response to a first pressure at the second input port 116 and a second pressure at the third input port 114. The system 100 further includes an electrical communicator that provides electronic information representative of the differential pressure and output from the electronic sensor at the output port, where the electrical communicator is disposed in the housing. In certain embodiments, the electrical communicator includes a communication means for providing electronic information representative of the differential pressure and output from the electronic sensor(s) at the output port 104, wherein the communication means is disposed in the housing 118.

The system 100 includes the housing 118 mounted on an aftertreatment component 212. The housing 118 is illustrated as being mounted on the second aftertreatment component 212, but the housing 118 may be mounted on the first aftertreatment component 214 or other aftertreatment component that may be included in a given embodiment of the system 100. In a further embodiment, the aftertreatment component includes an oxidation catalyst, the particulate filter, a NOx adsorber, a three-way catalyst, a four-way catalyst, a selective reduction catalyst, and/or a lean NOx reduction catalyst.

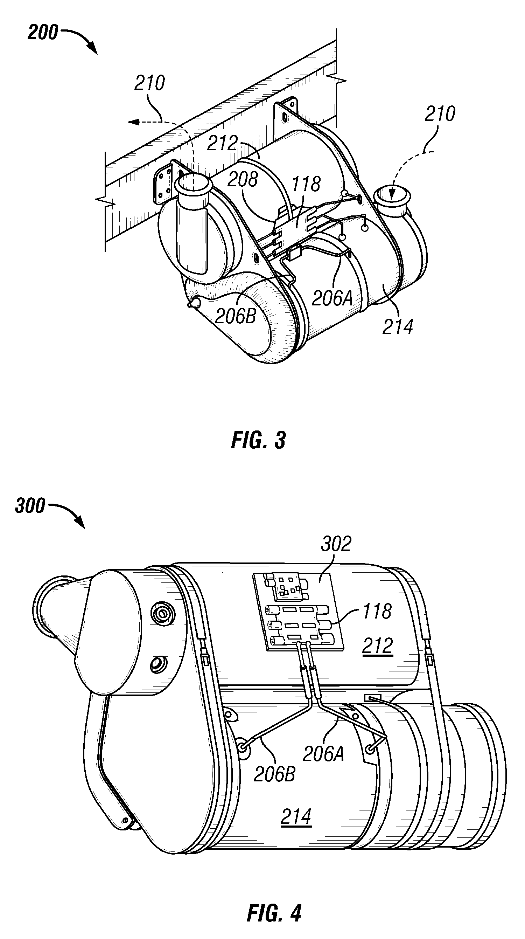

In an exemplary embodiment, the housing 118 is mounted on a metal plate 302 interposed between the housing 118 and the aftertreatment component 212. Referring to Fig. 4, the system 300 includes a housing 118 mounted on an aftertreatment component 212 with a metal plate 302 interposed therebetween. Referring to Fig. 3, in certain embodiments the housing is further mounted on a support 208 interposed between the housing 118 and the aftertreatment component 212. The support 208 provides a gap between the housing 118 and the aftertreatment component 212 (i.e. the distance between the housing 118 and the aftertreatment component 212). In certain embodiments, the gap includes a gap of at least 30 millimeters. In certain embodiments, the gap includes a gap large enough that, when the aftertreatment component 212 is at a rated temperature, a temperature of the housing 118 does not exceed 125° C.

The determination of an appropriate gap and/or housing 118 temperature depend in part upon the external temperature of the aftertreatment component 212, 214 during high temperature operation such as rated operation or during a regeneration event, the duration and frequency of high temperature operation events, the materials of the housing 118, the temperature constraints of connectors to the housing output 102 and housing inputs 104, 106,108, 110, 112, 114, 116. With the benefit of the disclosures herein and knowledge about the specifics of a particular embodiment of the system 100, one of skill in the art can select the gap and/or temperature requirement for the particular embodiment.

The system 100 includes a housing output 102. An external controller 192 is electronically coupled to the housing output 102, for example with an electrical conduit 194. The electrical conduit 194 connects to an external controller 192 via a datalink, a network, and/or by direct electrical signals over the conduit 194. The external controller 192 may be a controller associated with the engine 190 as shown, and/or may include, without limitation, multiple controllers, a controller associated with the transmission, or a controller associated with the aftertreatment system.

Fig. 5 is a schematic block diagram of an apparatus for providing electronic information 422 representative of aftertreatment sensor inputs 402, 404, 406, 408, 410 and a differential pressure 420. The electronic information 422 representative of the differential pressure 420 and aftertreatment sensor inputs 402, 404, 406, 408, 410 includes a modulated electric parameter, a datalink signal, and/or a network signal. In certain embodiments, the housing 118 includes only one output port 102. The system 100 includes a differential pressure sensor 418 that determines the differential pressure 420 in response to a first pressure value 412 at the second input port 116 and a second pressure value 414 at the third input port 114. The differential pressure sensor 418 may be a physical sensor providing a single differential pressure 420 value from the first and second pressure value 412, 414, or a pair of sensors to convert the first and second pressure value 412, 414 each to an electronic signal combined with a control element to calculate the differential pressure 420 by subtracting the first pressure value 412 from the second pressure value 414. The differential pressure 420 may be a modulated electric parameter (e.g. a voltage, a current, etc.), a datalink signal or a network signal (e.g. as a message structured for passing on a datalink), and/or as a digitized value stored on a computer readable medium.

The apparatus includes an electrical communicator that provides electronic information representative of the differential pressure and output from the electronic sensor(s) at the output port 102. The electrical communicator is disposed in the housing 118. An example electrical communicator includes a communication module 416 that provides the electronic information 422 as one or more modulated electric parameters to the output port 102, in parallel (e.g. utilizing separate pins for each parameter) and/or serially (e.g. provides a voltage output for a pin, synchronized in time or with a correlating signal such that communication is clear on which sensor value is presently communicated). Another example electrical communicator includes a communication module 416 that includes analog to digital conversion devices to convert the sensor inputs 402, 404, 406, 408, 410 and differential pressure 420 to digital parameters, and which passes the digital parameters as the electronic information 422 to the output port 102. The digital parameters may be values stored on a computer readable medium, and/or values passed as network or datalink messages.

In certain embodiments, some of the sensor inputs 402, 404, 406, 408, 410 and differential pressure 420 may be passed to the output port 102 as digital messages and other sensor inputs 402, 404, 406, 408, 410 and/or the differential pressure 420 may be provided as electric parameters at the output port 102. The communication module 416 may be implemented in hardware or software, and may include non-transitory computer code stored on a computer readable medium, where a controller (not shown) executes instructions to perform the functions of the communication module 420 in response to executing the computer code.

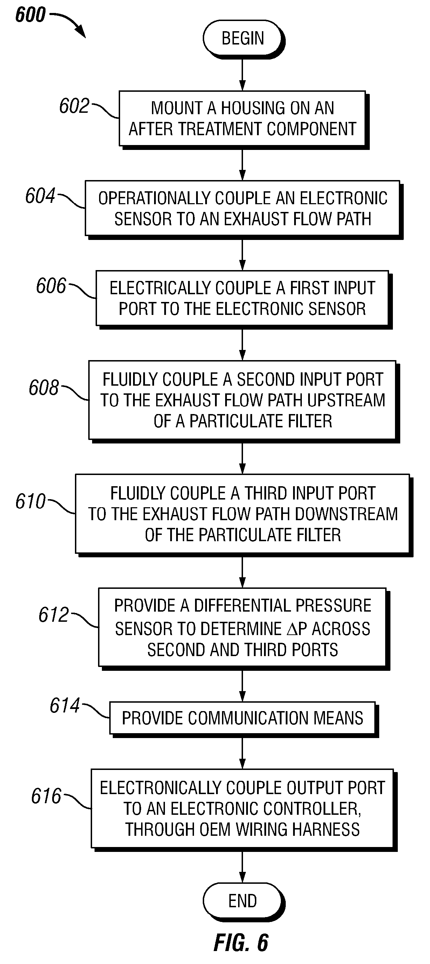

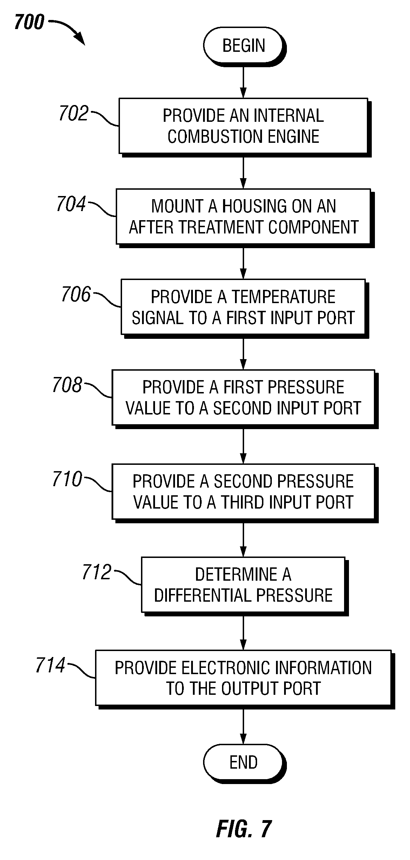

The schematic flow diagrams of Figs. 6 and 7 illustrate techniques for providing a sensor connection integration device for an aftertreatment system. Operations illustrated are understood to be exemplary only, and operations may be combined or divided, and added or removed, as well as re-ordered in whole or part, unless stated explicitly to the contrary herein.

Fig. 6 is a schematic flow diagram of a technique 600 for providing an integrated sensor connection device. The technique 600 includes an operation 602 to mount a housing on an aftertreatment component, and an operation 604 to operationally coupling an electronic sensor to an exhaust flowpath. The technique 600 further includes an operation 606 to electrically couple a first input port of the housing to the electronic sensor. The technique 600 further includes an operation 608 to fluidly couple a second input port of the housing to the exhaust flowpath at a position upstream of a particulate filter, and an operation 610 to fluidly couple a third input port of the housing to the exhaust flowpath at a position downstream of the particulate filter.

The technique 600 further includes an operation 612 to provide a differential pressure sensor that determines a differential pressure (ΔP) in response to a first pressure at the second input port and a second pressure at the third input port. The technique 600 includes an operation 614 to provide a communication means for providing electronic information representative of the differential pressure and the output from the electronic sensor at the output port, wherein the communication means is disposed in the housing, The technique 600 further includes an operation 616 to electronically couple an external controller to the output port, where the electronically coupling includes connecting the output port to an original equipment manufacturer wiring harness. The electronic information representative of the differential pressure and the output from the electronic sensor includes a modulated electric parameter, a datalink signal, and/or a network signal.

Fig. 7 is a schematic flow diagram of a technique 700 for providing electronic information representative of a differential pressure and an output from an electronic sensor. The technique 700 includes an operation 702 to provide an internal combustion engine having a exhaust flow that passes to an aftertreatment system including a number of aftertreatment components. The technique 700 further includes an operation 704 to mount a housing on one of the aftertreatment components, an operation 706 to provide a temperature signal to a first input port of the housing, an operation 708 to provide a first pressure value to a second port of the housing, and an operation 710 to provide a second pressure value to a third input port of the housing. The technique 700 further includes an operation 712 to determine a differential pressure in response to the first pressure value and the second pressure value, and an operation 714 to provide electronic information representative of a differential pressure and an output from an electronic sensor to an output port of the housing.

As is evident from the figures and text presented above, a variety of embodiments according to the present invention are contemplated.

While the invention has been illustrated and described in detail in the drawings and foregoing description, the same is to be considered as illustrative and not restrictive in character, it being understood that only certain exemplary embodiments have been shown and described and that all changes and modifications that come within the spirit of the inventions are desired to be protected. It should be understood that while the use of words such as preferable, preferably, preferred or more preferred utilized in the description above indicate that the feature so described may be more desirable, it nonetheless may not be necessary and embodiments lacking the same may be contemplated as within the scope of the invention, the scope being defined by the claims that follow. In reading the claims, it is intended that when words such as "a," "an," "at least one," or "at least one portion" are used there is no intention to limit the claim to only one item unless specifically stated to the contrary in the claim. When the language "at least a portion" and/or "a portion" is used the item can include a portion and/or the entire item unless specifically stated to the contrary.

## Claims

1. An apparatus, comprising:
a housing (118) having a first input port (104; 106; 108; 110; 112), a second input port (116), a third input port (114), and an output port (102);
an electronic sensor (202A-E) suitable to be operationally coupled to an exhaust flowpath (210);
an electrical conduit (204A-E) structured to electrically couple the electronic sensor (202A-E) to the first input port (104; 106; 108; 110; 112);
a first fluid conduit (206A) fluidly open to the second input port (116) at a first end and fluidly open to the exhaust flowpath (210) at a position upstream of a particulate filter at a second end;
a second fluid conduit (206B) fluidly open to the third input port (114) at a first end and fluidly open to the exhaust flowpath (210) at a position downstream of the particulate filter at a second end;
a differential pressure sensor (418) structured to determine a differential pressure in response to a first pressure at the second input port (116) and a second pressure at the third input port (114), wherein the differential pressure sensor (418) is located in the housing (118); and
an electrical communicator structured to provide electronic information representative of the differential pressure and output from the electronic sensor (202A-E) at the output port (102), wherein the electrical communicator is disposed in the housing (118).

2. The apparatus of claim 1, wherein the electronic sensor (202A-E) comprises a sensor selected from the sensors consisting of: a thermistor, an oxygen sensor, a a NOₓ sensor, a mass airflow sensor, and a pressure sensor.

3. The apparatus of claim 1 or claim 2, wherein the housing (118) is suitable to be mounted on an aftertreatment component (212).

4. The apparatus of claim 3, wherein the aftertreatment component (212) comprises at least one component selected from the components consisting of: an oxidation catalyst, the particulate filter, a NOx adsorber, a three-way catalyst, a four-way catalyst, a selective reduction catalyst, a lean NOx reduction catalyst.

5. The apparatus of claim 3, wherein the housing (118) is further suitable to be mounted on a metal plate (302) interposed between the housing (118) and the aftertreatment component (212).

6. The apparatus of claim 5, wherein the housing (118) is further suitable to be mounted on a support (208) interposed between the housing (118) and the aftertreatment component (212), wherein the support (208) is structured to provide a gap between the housing (118) and the aftertreatment component (212);

7. The apparatus of claim 6, wherein the gap comprises at least 30 millimeters.

8. The apparatus of claim 6 or claim 7, wherein the gap comprises a gap such that, when the aftertreatment component (212) is at a rated temperature, a temperature of the housing (118) does not exceed 125° C.

9. The apparatus of any preceding claim, wherein the electronic information (422) representative of the differential pressure and output from the electronic sensor (202A-E) comprises at least one information element selected from the information elements consisting of: a modulated electric parameter, a datalink signal, and a network signal; and/or wherein
the housing (118) has only one output port (102).

10. A method, comprising:
mounting a housing on an aftertreatment component (602; 704), the housing comprising a plurality of input ports and an output port;
operationally coupling an electronic sensor to an exhaust flowpath (604), wherein the aftertreatment component is disposed in the exhaust flowpath;
electrically coupling a first input port of the housing to the electronic sensor (606);
fluidly coupling a second input port of the housing to the exhaust flowpath at a position upstream of a particulate filter (608);
fluidly coupling a third input port of the housing to the exhaust flowpath at a position downstream of the particulate filter (610);
providing a differential pressure sensor structured to determine a differential pressure in response to a first pressure at the second input port and a second pressure at the third input port (612; 712), wherein the differential pressure sensor is located in the housing; and
providing a communication means (614) for providing electronic information representative of the differential pressure and the output from the electronic sensor at the output port (714), wherein the communication means is disposed in the housing.

11. The method of claim 10, wherein the aftertreatment component comprises a NOx reduction catalyst and an oxidation catalyst; wherein optionally
the particulate filter is disposed in a second aftertreatment component.

12. The method of claim 10 or claim 11, further comprising electronically coupling an external controller to the output port; wherein optionally
the electronically coupling comprises connecting the output port to an original equipment manufacturer wiring harness.

13. The method of any of claims 10 to 12, wherein the electronic information representative of the differential pressure and the output from the electronic sensor comprises at least one information element selected from the information elements consisting of: a modulated electric parameter, a datalink signal, and a network signal.

14. A system, comprising:
an exhaust flowpath (210) fluidly coupled to an internal combustion engine (190);
a first aftertreatment component (214) disposed in the exhaust flowpath (210), the first aftertreatment component (214) comprising a first oxidation catalyst upstream of a particulate filter;
a second aftertreatment component (212) disposed in the exhaust flowpath (210), the second aftertreatment component (212) comprising a a NOₓ reduction catalyst upstream of a second oxidation catalyst;
a housing (118) mounted on one of the first aftertreatment component (214) and the second aftertreatment component (212), the housing (118) having an output port (102) and a plurality of input ports (104; 106; 108; 110; 112);
a first temperature sensor (202D) operationally coupled to the exhaust flowpath (210) at a position upstream of the first oxidation catalyst, and a first electrical conduit (204D) that electrically couples the first temperature sensor (202D) to a first input port (110) of the housing (118);
a first fluid conduit (206A) fluidly open to a second input port (116) of the housing (118) at a first end and fluidly open to the exhaust flowpath (210) at a position upstream of the particulate filter at a second end;
a second fluid conduit (206B) fluidly open to a third input port (114) of the housing (118) at a first end and fluidly open to the exhaust flowpath (210) at a position downstream of the particulate filter at a second end;
a differential pressure sensor (418) structured to determine a differential pressure in response to a first pressure at the second input port (116) and a second pressure at the third input port (114), wherein the differential pressure sensor (418) is located in the housing (118);
a second temperature sensor (202E) operationally coupled to the exhaust flowpath (210) at a position downstream of the first oxidation catalyst and upstream of the particulate filter, and a second electrical conduit (204E) that electrically couples the second temperature sensor (202E) to a fourth input port (112) of the housing (118);
a third temperature sensor (202A) operationally coupled to the exhaust flowpath (210) at a position downstream of the particulate filter, and a third electrical conduit (204A) that electrically couples the third temperature sensor (202A) to a fifth input port (108) of the housing (118);
a fourth temperature sensor (202B) operationally coupled to the exhaust flowpath (210) at a position upstream of the NOx reduction catalyst, and a fourth electrical conduit (204B) that electrically couples the fourth temperature sensor (202B) to a sixth input port (106) ofthe housing (118);
a fifth temperature sensor (202C) operationally coupled to the exhaust flowpath (210) at a position downstream of the second oxidation catalyst, and a fifth electrical conduit (204C) that electrically couples the fifth temperature sensor (202C) to a seventh input port (104) of the housing (118); and
an electrical communicator structured to provide electronic information (422) representative ofthe differential pressure and output from each ofthe temperature sensors at the output port (102) of the housing (118), wherein the electrical communicator is disposed in the housing (118).

15. The system of claim 14, wherein the housing (118) is further mounted on a metal plate (302) interposed between the housing (118) and the one of the first aftertreatment component (214) and the second aftertreatment component (212).

16. The system of claim 14, wherein the housing (118) is further mounted on a support (208) interposed between the housing (118) and the one of the first aftertreatment component (214) and the second aftertreatment component (212), wherein the support (208) is structured to provide a gap between the housing (118) and the one of the first aftertreatment component (214) and the second aftertreatment component (212), wherein the gap comprises a gap such that, when the one of the first aftertreatment component (214) and the second aftertreatment component (212) is at a rated temperature, a temperature of the housing (118) does not exceed 125° C.

17. The system of claim 14, wherein the housing (118) is further mounted on a support (208) interposed between the housing (118) and the one of the first aftertreatment component (214) and the second aftertreatment component (212), wherein the support (208) is structured to provide a gap between the housing (118) and the one of the first aftertreatment component (214) and the second aftertreatment component (212), wherein the gap comprises at least 30 mm;

18. The system of claim 14 and of claims 15 to 17, wherein the electronic information (422) representative of the differential pressure and output from each of the temperature sensors (202A-E) comprises at least one information element selected from the information elements consisting of: a modulated electric parameter, a datalink signal, and a network signal.

## Patentansprüche

1. Vorrichtung, die Folgendes umfasst:
ein Gehäuse (118), das eine erste Einlassöffnung (104; 106; 108; 110; 112), eine zweite Einlassöffnung (116), eine dritte Einlassöffnung (114) und eine Auslassöffnung (102) aufweist,
einen elektronischen Sensor (202A-E), der dafür geeignet ist, wirksam an eine Abgas-Strömungsbahn (210) angeschlossen zu werden,
eine elektrische Leitung (204A-E), die dafür strukturiert ist, den elektronischen Sensor (202A-E) elektrisch an die erste Einlassöffnung (104; 106; 108; 110; 112) anzuschließen,
eine erste Fluidleitung (206A), die an einem ersten Ende fluidmäßig offen ist zu der zweiten Einlassöffnung (116) und an einem zweiten Ende fluidmäßig offen ist zu der Abgas-Strömungsbahn (210) an einer Position, stromaufwärts von einem Partikelfilter,
eine zweite Fluidleitung (206B), die an einem ersten Ende fluidmäßig offen ist zu der dritten Einlassöffnung (114) und an einem zweiten Ende fluidmäßig offen ist zu der Abgas-Strömungsbahn (210) an einer Position, stromabwärts von dem Partikelfilter,
einen Differenzdrucksensor (418), der dafür strukturiert ist, einen Differenzdruck als Reaktion auf einen ersten Druck an der zweiten Einlassöffnung (116) und einen zweiten Druck an der dritten Einlassöffnung (114) zu bestimmen, wobei der Differenzdrucksensor (418) in dem Gehäuse (118) angeordnet ist, und
einen elektrischen Geber, der dafür strukturiert ist, elektronische Informationen, die den Differenzdruck und die Ausgabe aus dem elektronischen Sensor (202A-E) an der Auslassöffnung (102) darstellen, bereitzustellen, wobei der elektrische Geber in dem Gehäuse (118) angeordnet ist.

2. Vorrichtung nach Anspruch 1, wobei der elektronische Sensor (202A-E) einen Sensor umfasst, der ausgewählt ist aus den Sensoren, die bestehen aus: einem Thermistor, einem Sauerstoffsensor, einem NOₓ-Sensor, einem Luftmassenstrom-Sensor und einem Drucksensor.

3. Vorrichtung nach Anspruch 1 oder Anspruch 2, wobei das Gehäuse (118) dafür geeignet ist, an einem Nachbehandlungsbauteil (212) angebracht zu werden.

4. Vorrichtung nach Anspruch 3, wobei das Nachbehandlungsbauteil (212) wenigstens ein Bauteil umfasst, das ausgewählt ist aus den Bauteilen, die bestehen aus: einem Oxidationskatalysator, dem Partikelfilter, einem NOₓ-Adsorber, einem Dreiwegekatalysator, einem Vierwegekatalysator, einem selektiven Reduktionskatalysator, einem mageren NOₓ-Reduktionskatalysator.

5. Vorrichtung nach Anspruch 3, wobei das Gehäuse (118) ferner dafür geeignet ist, an einer Metallplatte (302) angebracht zu werden, die zwischen dem Gehäuse (118) und dem Nachbehandlungsbauteil (212) eingefügt ist.

6. Vorrichtung nach Anspruch 5, wobei das Gehäuse (118) ferner dafür geeignet ist, an einer Stütze (208) angebracht zu werden, die zwischen dem Gehäuse (118) und dem Nachbehandlungsbauteil (212) eingefügt ist, wobei die Stütze (208) dafür strukturiert ist, einen Spalt zwischen dem Gehäuse (118) und dem Nachbehandlungsbauteil (212) bereitzustellen.

7. Vorrichtung nach Anspruch 6, wobei der Spalt wenigstens 30 mm umfasst.

8. Vorrichtung nach Anspruch 6 oder Anspruch 7, wobei der Spalt einen Spalt umfasst, derart, dass, wenn sich das Nachbehandlungsbauteil (212) bei einer Nenntemperatur befindet, eine Temperatur des Gehäuses (118) 125°C nicht überschreitet.

9. Vorrichtung nach einem der vorhergehenden Ansprüche, wobei die elektronischen Informationen (422), die den Differenzdruck und die Ausgabe aus dem elektronischen Sensor (202A-E) darstellen, wenigstens ein Informationselement umfassen, das ausgewählt ist aus den Informationselementen, die bestehen aus: einem modulierten elektrischen Parameter, einem Datenverbindungssignal und einem Netzsignal, und/oder wobei
das Gehäuse (118) nur eine Auslassöffnung (102) aufweist.

10. Verfahren, das Folgendes umfasst:
das Anbringen eines Gehäuses an einem Nachbehandlungsbauteil (602; 704), wobei das Gehäuse mehrere Einlassöffnungen und eine Auslassöffnung umfasst,
das wahlweise Anschließen eines elektronischen Sensors an eine Abgas-Strömungsbahn (604), wobei das Nachbehandlungsbauteil in der Abgas-Strömungsbahn angeordnet ist,
das elektrische Anschließen einer ersten Einlassöffnung des Gehäuses an den elektronischen Sensor (606),
das fluidmäßige Anschließen einer zweiten Einlassöffnung des Gehäuses an die Abgas-Strömungsbahn an einer Position, stromaufwärts von einem Partikelfilter (608),
das fluidmäßige Anschließen einer dritten Einlassöffnung des Gehäuses an die Abgas-Strömungsbahn an einer Position, stromabwärts von dem Partikelfilter (610),
das Bereitstellen eines Differenzdrucksensors, der dafür strukturiert ist, einen Differenzdruck als Reaktion auf einen ersten Druck an der zweiten Einlassöffnung und einen zweiten Druck an der dritten Einlassöffnung (612; 712) zu bestimmen, wobei der Differenzdrucksensor in dem Gehäuse angeordnet ist, und
das Bereitstellen eines Kommunikationsmittels (614) zum Bereitstellen elektronischer Informationen, die den Differenzdruck und die Ausgabe aus dem elektronischen Sensor an der Auslassöffnung darstellen (714), wobei das Kommunikationsmittel in dem Gehäuse angeordnet ist.

11. Verfahren nach Anspruch 10, wobei das Nachbehandlungsbauteil einen NOₓ-Reduktionskatalysator und einen Oxidationskatalysator umfasst, wobei wahlweise
der Partikelfilter in einem zweiten Nachbehandlungsbauteil angeorndet ist.

12. Verfahren nach Anspruch 10 oder Anspruch 11, das ferner das elektronische Anschließen eines externen Steuergeräts an die Auslassöffnung umfasst, wobei wahlweise
das elektronische Anschließen das Verbinden der Auslassöffnung mit einem Erstausrüster-Kabelbaum umfasst.

13. Verfahren nach einem der Ansprüche 10 bis 12, wobei die elektronischen Informationen, die den Differenzdruck und die Ausgabe aus dem elektronischen Sensor darstellen, wenigstens ein Informationselement umfassen, das ausgewählt ist aus den Informationselementen, die bestehen aus: einem modulierten elektrischen Parameter, einem Datenverbindungssignal und einem Netzsignal.

14. System, das Folgendes umfasst:
eine Abgas-Strömungsbahn (210), die fluidmäßig an eine Verbrennungskraftmaschine (190) angeschlossen ist,
ein erstes Nachbehandlungsbauteil (214), das in der Abgas-Strömungsbahn (210) angeordnet ist, wobei das erste Nachbehandlungsbauteil (214) einen ersten Oxidationskatalysator stromaufwärts von einem Partikelfilter umfasst,
ein zweites Nachbehandlungsbauteil (212), das in der Abgas-Strömungsbahn (210) angeordnet ist, wobei das zweite Nachbehandlungsbauteil (212) einen NOₓ-Reduktionskatalysator stromaufwärts von einem zweiten Oxidationskatalysator umfasst,
ein Gehäuse (118), das an einem von dem ersten Nachbehandlungsbauteil (214) und dem zweiten Nachbehandlungsbauteil (212) angebracht ist, wobei das Gehäuse (118) eine Auslassöffnung (102) und mehrere Einlassöffnungen (104; 106; 108; 110; 112) aufweist,
einen ersten Temperatursensor (202D), der wirksam an die Abgas-Strömungsbahn (210) an einer Position, stromaufwärts von dem ersten Oxidationskatalysator, angeschlossen ist, und eine erste elektrische Leitung (204D), die den ersten Temperatursensor (202D) elektrisch an eine erste Einlassöffnung (110) des Gehäuses (118) anschließt,
eine erste Fluidleitung (206A), die an einem ersten Ende fluidmäßig offen ist zu einer zweiten Einlassöffnung (116) des Gehäuses (118) und an einem zweiten Ende fluidmäßig offen ist zu der Abgas-Strömungsbahn (210) an einer Position, stromaufwärts von dem Partikelfilter,
eine zweite Fluidleitung (206B), die an einem ersten Ende fluidmäßig offen ist zu einer dritten Einlassöffnung (114) des Gehäuses (118) und an einem zweiten Ende fluidmäßig offen ist zu der Abgas-Strömungsbahn (210) an einer Position, stromabwärts von dem Partikelfilter,
einen Differenzdrucksensor (418), der dafür strukturiert ist, einen Differenzdruck als Reaktion auf einen ersten Druck an der zweiten Einlassöffnung (116) und einen zweiten Druck an der dritten Einlassöffnung (114) zu bestimmen, wobei der Differenzdrucksensor (418) in dem Gehäuse (118) angeordnet ist,
einen zweiten Temperatursensor (202E), der wirksam an die Abgas-Strömungsbahn (210) an einer Position, stromabwärts von dem ersten Oxidationskatalysator und stromaufwärts von dem Partikelfilter, angeschlossen ist, und eine zweite elektrische Leitung (204E), die den zweiten Temperatursensor (202E) elektrisch an eine vierte Einlassöffnung (112) des Gehäuses (118) anschließt,
einen dritten Temperatursensor (202A), der wirksam an die Abgas-Strömungsbahn (210) an einer Position, stromabwärts von dem Partikelfilter, angeschlossen ist, und eine dritte elektrische Leitung (204A), die den dritten Temperatursensor (202A) elektrisch an eine fünfte Einlassöffnung (108) des Gehäuses (118) anschließt,
einen vierten Temperatursensor (202B), der wirksam an die Abgas-Strömungsbahn (210) an einer Position, stromaufwärts von dem NOₓ-Reduktionskatalysator, angeschlossen ist, und eine vierte elektrische Leitung (204A), die den vierten Temperatursensor (202A) elektrisch an eine sechste Einlassöffnung (106) des Gehäuses (118) anschließt,
einen fünften Temperatursensor (202C), der wirksam an die Abgas-Strömungsbahn (210) an einer Position, stromabwärts von dem zweiten Oxidationskatalysator, angeschlossen ist, und eine fünfte elektrische Leitung (204C), die den fünften Temperatursensor (202C) elektrisch an eine siebente Einlassöffnung (104) des Gehäuses (118) anschließt, und
einen elektrischen Geber, der dafür strukturiert ist, elektronische Informationen (422), die den Differenzdruck und die Ausgabe aus jedem der Temperatursensoren an der Auslassöffnung (102) des Gehäuses (118) darstellen, bereitzustellen, wobei der elektrische Geber in dem Gehäuse (118) angeordnet ist.

15. System nach Anspruch 14, wobei das Gehäuse (118) ferner an einer Metallplatte (302) angebracht ist, die zwischen dem Gehäuse (118) und dem einen von dem ersten Nachbehandlungsbauteil (214) und dem zweiten Nachbehandlungsbauteil (212) eingefügt ist.

16. System nach Anspruch 14, wobei das Gehäuse (118) ferner an einer Stütze (208) angebracht ist, die zwischen dem Gehäuse (118) und dem einen von dem ersten Nachbehandlungsbauteil (214) und dem zweiten Nachbehandlungsbauteil (212) eingefügt ist, wobei die Stütze (208) dafür strukturiert ist, einen Spalt zwischen dem Gehäuse (118) und dem einen von dem ersten Nachbehandlungsbauteil (214) und dem zweiten Nachbehandlungsbauteil (212) bereitzustellen, wobei der Spalt einen Spalt umfasst, derart, dass, wenn sich das eine von dem ersten Nachbehandlungsbauteil (214) und dem zweiten Nachbehandlungsbauteil (212) bei einer Nenntemperatur befindet, eine Temperatur des Gehäuses (118) 125°C nicht überschreitet.

17. System nach Anspruch 14, wobei das Gehäuse (118) ferner an einer Stütze (208) angebracht ist, die zwischen dem Gehäuse (118) und dem einen von dem ersten Nachbehandlungsbauteil (214) und dem zweiten Nachbehandlungsbauteil (212) eingefügt ist, wobei die Stütze (208) dafür strukturiert ist, einen Spalt zwischen dem Gehäuse (118) und dem einen von dem ersten Nachbehandlungsbauteil (214) und dem zweiten Nachbehandlungsbauteil (212) bereitzustellen, wobei der Spalt wenigstens 30 mm umfasst.

18. System nach Anspruch 14 und Anspruch 15 bis 17, wobei die elektronischen Informationen (422), die den Differenzdruck und die Ausgabe aus jedem der Temperatursensoren (202A-E) darstellen, wenigstens ein Informationselement umfassen, das ausgewählt ist aus den Informationselementen, die bestehen aus: einem modulierten elektrischen Parameter, einem Datenverbindungssignal und einem Netzsignal.

## Revendications

1. Appareil, comprenant :
un boîtier (118) comportant un premier port d'entrée (104 ; 106 ; 108 ; 110 ; 112), un deuxième port d'entrée (116), un troisième port d'entrée (114) et un port de sortie (102) ;
un capteur électronique (202A-E) adapté pour être accouplé en service à une trajectoire d'écoulement d'échappement (210) ;
un conduit électrique (204A-E), structuré de sorte à assurer l'accouplement électrique du capteur électronique (202A-E) et du premier port d'entrée (104 ; 106 ; 108 ; 110 ; 112) ;
un premier conduit de fluide (206A) à ouverture de fluide vers le deuxième orifice d'entrée (116) au niveau d'une première extrémité, et à ouverture de fluide vers la trajectoire d'écoulement d'échappement (210) au niveau d'une position située en amont d'un filtre à particules au niveau d'une deuxième extrémité ;
un deuxième conduit de fluide (206B) ouvert vers le troisième port d'entrée (114) au niveau d'une première extrémité et à ouverture de fluide vers la trajectoire d'écoulement d'échappement (210) au niveau d'une position située en aval du filtre à particules au niveau d'une deuxième extrémité ;
un capteur de pression différentielle (418), structuré de sorte à déterminer une pression différentielle en réponse à une première pression au niveau du deuxième port d'entrée (116) et une deuxième pression au niveau du troisième port d'entrée (114) le capteur de pression différentielle (418) étant agencé dans le boîtier (118) ; et
un moyen de communication électrique, structuré de sorte à fournir des informations électroniques représentatives de la pression différentielle et de la sortie du capteur électronique (202A-E) au niveau du port de sortie (102), le moyen de communicateur électrique étant agencé dans le boîtier (118).

2. Appareil selon la revendication 1, dans lequel le capteur électronique (202A-E) comprend un capteur sélectionné parmi les capteurs comprenant un thermistor, un capteur d'oxygène, un capteur de NOₓ, un capteur du débit massique de l'air, et un capteur de pression.

3. Appareil selon la revendication 1 ou 2, dans lequel le boîtier (118) est adapté pour être monté sur un composant de post-traitement (212).

4. Appareil selon la revendication 3, dans lequel le composant de post-traitement (212) comprend au moins un composant sélectionné parmi les composants constitués de : un catalyseur d'oxydation, le filtre à particules, un adsorbeur de NOₓ, un catalyseur à trois voies, un catalyseur à quatre voies, un catalyseur à réduction sélective, un catalyseur de réduction de a NOₓ à faible teneur.

5. Appareil selon la revendication 3, dans lequel le boîtier (118) et en outre approprié pour être monté sur une plaque métallique (302) agencée entre le boîtier (118) et le composant de post-traitement (212).

6. Appareil selon la revendication 5, dans lequel le boîtier (118) est en outre approprié pour être monté sur un support (208) agencé entre le boîtier (118) et le composant de post-traitement (212), le support (208) étant structuré de sorte à établir un espace entre le boîtier (118) et le composant de post-traitement (212).

7. Appareil selon la revendication 6, dans lequel l'espace comprend au moins 30 millimètres.

8. Appareil selon les revendications 6 ou 7, dans lequel l'espace comprend un espace tel que lorsque le composant de post-traitement (212) est à une température nominale, une température du boîtier (118) ne dépasse pas 125°C.

9. Appareil selon l'une quelconque des revendications précédentes, dans lequel les informations électroniques (422) représentatives de la pression différentielle et de la sortie du capteur électronique (202A-E) comprennent au moins un élément d'information sélectionné parmi les éléments d'information constitués de : un paramètre électrique modulé, un signal de liaison de données, et un signal de réseau ;
et/ou dans lequel :
le boîtier (118) comporte seulement un port de sortie (102).

10. Procédé, comprenant les étapes ci-dessous :
montage d'un boîtier sur un composant de post-traitement (602 ; 704), le boîtier comprenant plusieurs ports d'entrée et un port de sortie ;
accouplement en service d'un capteur électronique à une trajectoire d'écoulement d'échappement (604), le composant de post-traitement étant agencé dans la trajectoire d'écoulement d'échappement ;
accouplement électrique du premier port d'entrée du boîtier au capteur électronique (606) ;
accouplement par le fluide d'un deuxième port d'entrée du boîtier à la trajectoire d'écoulement d'échappement au niveau d'une position située en amont d'un filtre de particules (608) ;
accouplement par le fluide d'un troisième port d'entrée du boîtier à la trajectoire d'écoulement d'échappement au niveau d'une position située en aval du filtre à particules (610) ;
fourniture d'un capteur de pression différentielle, structuré de sorte à déterminer une pression différentielle en réponse à une première pression au niveau du deuxième port d'entrée et d'une deuxième pression au niveau du troisième port d'entrée (612 ; 712), le capteur de pression différentielle étant agencé dans le boîtier ; et
fourniture d'un moyen de communication (614) pour fournir des informations électroniques représentatives de la pression différentielle et de la sortie du capteur électronique au niveau du port de sortie (714), le moyen de communication étant agencé dans le boîtier.

11. Procédé selon la revendication 10, dans lequel le composant de post-traitement comprend un catalyseur de réduction de a NOₓ et un catalyseur d'oxydation ; dans lequel optionnellement :
le filtre à particules est agencé dans un deuxième composant de post-traitement.

12. Procédé selon la revendication 10 ou 11, comprenant en outre l'étape d'accouplement électronique d'un moyen de commande externe au port de sortie ; dans lequel optionnellement :
l'étape d'accouplement électronique comprend la connexion du port de sortie à un câblage électrique d'un fabricant d'équipement originel.

13. Procédé selon l'une quelconque des revendications 10 à 12, dans lequel les informations électroniques représentatives de la pression différentielle et de la sortie du capteur électronique comprennent au moins un élément d'information sélectionné parmi les éléments d'informations constitués de : un paramètre électrique modulé, un signal de liaison de données, et un signal de réseau.

14. Système, comprenant :
une trajectoire d'écoulement d'échappement (210) accouplée par le fluide à un moteur à combustion interne (190) ;
un premier composant de post-traitement (214), agencé dans la trajectoire d'écoulement d'échappement (210), le premier composant de post-traitement (214) comprenant un premier catalyseur d'oxydation en amont d'un filtre à particules ;
un deuxième composant de post-traitement (212), agencé dans la trajectoire d'écoulement d'échappement (210), le deuxième composant de post-traitement (212) comprenant un catalyseur de réduction de a NOₓ agencé en amont d'un deuxième catalyseur d'oxydation ;
un boîtier (118) monté sur l'un des composants, le premier composant post-traitement (214) ou le deuxième composant post-traitement (212), le boîtier (118) comportant un port de sortie (102) et plusieurs ports d'entrée (104 ; 106 ; 108 ; 110 ; 112) ;
un premier capteur de température (202D), accouplé en service à la trajectoire d'écoulement d'échappement (210) au niveau d'une position située en amont du premier catalyseur d'oxydation, et un premier conduit électrique (204D) assurant l'accouplement électrique du premier capteur de température (202D) et d'un premier port d'entrée (110) du boîtier (118) ;
un premier conduit de fluide (206A) à ouverture de fluide vers un deuxième port d'entrée (116) du boîtier (118) au niveau d'une première extrémité, et à ouverture de fluide vers la trajectoire d'écoulement d'échappement (210) au niveau d'un position située en amont du filtre à particules au niveau d'une deuxième extrémité ;
un deuxième conduit de fluide (206B) à ouverture de fluide vers un troisième port d'entrée (114) du boîtier (118) au niveau d'une première extrémité, et à ouverture de fluide vers la trajectoire d'écoulement d'échappement (210) au niveau d'une position située en aval du filtre à particules au niveau d'une deuxième extrémité ;
un capteur de pression différentielle (418), structuré de sorte à déterminer une pression différentielle en réponse à une première pression au niveau du deuxième port d'entrée (116) et une deuxième pression au niveau du troisième port d'entrée (114), le capteur de pression différentielle (418) étant agencé dans le boîtier (118) ;
un deuxième capteur de température (202E), accouplé en service à la trajectoire d'écoulement d'échappement (210) au niveau d'une position située en aval du premier catalyseur d'oxydation et en amont du filtre à particules, et un deuxième conduit électrique (204E) assurant l'accouplement électrique du deuxième capteur de température (202 E) et d'un quatrième port d'entrée (112) du boîtier (118) ;
un troisième capteur de température (202A), accouplé en service à la trajectoire d'écoulement d'échappement (210) au niveau d'une position située en aval du filtre à particules, et un troisième conduit électrique (204A) assurant l'accouplement électrique du troisième capteur de température (202A) et d'un cinquième port d'entrée (108) du boîtier (118) ;
un quatrième capteur de température (202B) accouplé en service à la trajectoire d'écoulement d'échappement (210) au niveau d'une position située en amont du catalyseur de réduction de NOₓ, et un quatrième conduit électrique (204B) assurant l'accouplement électrique du quatrième capteur de température (202B) et d'un sixième port d'entrée (106) du boîtier (118),
un cinquième capteur de température (202C), accouplé en service à la trajectoire d'écoulement d'échappement (210) au niveau d'une position située en aval du deuxième catalyseur d'oxydation, et un cinquième conduit électrique (204C) assurant l'accouplement électrique du cinquième capteur de température (202C) et d'un septième port d'entrée (104) du boîtier (118) ; et
un moyen de communication électrique, structuré de sorte à fournir des informations électroniques (422) représentatives de la pression différentielle et de la sortie de chacun des capteurs de température au niveau du port de sortie (102) du boîtier (118), le moyen de communication électrique étant agencé dans le boîtier (118).

15. Système selon la revendication 14, dans lequel le boîtier (118) est en outre monté sur une plaque métallique (302), agencée entre le boîtier (118) et ledit un composant, le premier composant de post-traitement (214) ou le deuxième composant de post-traitement (212).

16. Système selon la revendication 14, dans lequel le boîtier (118) est en outre monté sur un support (208) agencé entre le boîtier (118) et ledit un composant, le premier composant de post-traitement (214) ou le deuxième composant de post-traitement (212), le support (208) étant structuré de sorte à établir un espace entre le boîtier (118) et ledit un composant, le premier composant de post-traitement (214) ou le deuxième composant de post-traitement (212), l'espace comprenant un espace tel que lorsque ledit un composant, le premier composant de post-traitement (214) ou le deuxième composant de post-traitement (212), est à une température nominale, une température du boîtier (118) de dépasse pas 125°C.

17. Système selon la revendication 14, dans lequel le boîtier (118) est en outre monté sur un support (208) agencé entre le boîtier (118) et ledit un composant, le premier composant de post-traitement (214) ou le deuxième composant de post-traitement (212), le support (208) étant structuré pour fournir un espace entre le boîtier (118) et ledit un composant, le premier composant de post-traitement (214) ou le deuxième composant de post-traitement (212), l'espace comprenant au moins 30 mm.

18. Système selon la revendication 14 et selon l'une des revendications 15 à 17, dans lequel les informations électroniques (422) représentatives de la pression différentielle et de la sortie de chacun des capteurs de température (202A-E) comprend au moins un élément d'information sélectionné parmi les éléments d'information constitués de : un paramètre électrique modulé ; un signal de liaison de données, et un signal de réseau.
